Europäisches Patentamt

European Patent Office

Office européen des brevets

(11) Veröffentlichungsnummer : **0 082 432 B1**

(12) **EUROPÄISCHE PATENTSCHRIFT**

(45) Veröffentlichungstag der Patentschrift :
04.03.87

(21) Anmeldenummer : 82111428.7

(22) Anmeldetag : 09.12.82

(51) Int. Cl.⁴ : **D 07 B   1/14**

(54) Drahtseil mit dauerhaften Kennträger.

(30) Priorität : 18.12.81 DE 8136921 U

(43) Veröffentlichungstag der Anmeldung :
29.06.83 Patentblatt 83/26

(45) Bekanntmachung des Hinweises auf die Patenterteilung : 04.03.87 Patentblatt 87/10

(84) Benannte Vertragsstaaten :
AT BE CH DE FR GB LI NL SE

(56) Entgegenhaltungen :
DE-C-  911 108
FR-A-  479 708
GB-A-  146 384
GB-A-  318 588
US-A- 1 635 750
US-A- 1 762 918
US-A- 2 031 267
US-A- 2 382 355
US-A- 2 399 157

(73) Patentinhaber : **HOECHST AKTIENGESELLSCHAFT**
Postfach 80 03 20
D-6230 Frankfurt am Main 80 (DE)

(72) Erfinder : **Greatz, Reinhardt**
Schönbergstrasse 92
D-6200 Wiesbaden (DE)
Erfinder : **Korneli, Wolfgang, Dr.**

Verstorben (DE)

## Beschreibung

Die Erfindung betrifft ein Drahtseil, bestehend aus mehreren Litzen, die um eine Faser- oder Stahldrahteinlage verseilt sind, welches einen dauerhaften Kennträger enthält, wobei der Kennträger in Form eines mit Informationen versehenen Kunststoffbandes, welches wendelförmig um ein Trägerelement gewickelt ist, in längsaxialer Richtung in das Drahtseil eingearbeitet ist.

Drahtseile sind bezüglich ihrer Qualitätsmerkmale, wie Festigkeit, Metallzusammensetzung, Korrosionsbeständigkeit und ähnlichem, rein äußerlich schwer zu unterscheiden. Man hat also versucht, die für die unterschiedlichen technischen Anwendungen vorgesehenen Drahtseile zu kennzeichnen.

Aus der US-A-1 635 750 ist bereits ein Drahtseil bekannt, bei dem als Kennträger ein mit Informationen versehenes Kunststoffband vorgesehen ist. Die dort als Kunststoffmaterialien angegebenen Zellulosederivate lassen aber bezüglich ihrer Dauerbeständigkeit gegen mechanische und chemische Beeinflussung stark zu wünschen übrig. Bei dem Gebrauch von Drahtseilen treten nämlich insbesondere verschiedenen Probleme auf.

Beim Lauf von Seilen über Rollen verschieben sich die Litzen gegenüber der Seileinlage. Diese Verschiebung erfolgt unter hohem spezifischem Druck. Durch diese mechanische Einwirkung werden üblicherweise die herkömmlichen Kennträger beschädigt oder zerstört.

Desweiteren werden Drahtseile bei ihrer Verwendung oft mit Fetten, Schmier- und Imprägnierungsmitteln versehen, gegen die der Kennträger chemisch beständig sein muß. Diese Schmier- und Imprägnierungsmittel haben auch die Eigenschaft, daß sie den bei der mechanischen Beanspruchung der Drahtseile anfallenden Stahlstaub binden. Dadurch färben sich die Drahtseile nach kurzer Betriebszeit schwarz, wodurch die Farbe des Kennträgers oft unkenntlich wird. Außerdem entstehen durch den Stahlstaub auch wieder mechanische Beanspruchungen, denen die üblichen Kennträger oft nicht gewachsen sind.

Darüber hinaus haben die Drahtseile bei normalem Betrieb eine Temperatur von etwa 100 °C, bei allerhöchster Belastung können aber auch 200 bis 300 °C erreicht werden. Durch diese extremen Temperaturen werden oftmals herkömmliche Kennträger verfärbt oder verschmort.

Aufgabe der Erfindung ist es, ein Drahtseil bereitzustellen, welches einen Kennträger enthält, der eine verbesserte Dauerbeständigkeit gegen mechanische Beanspruchung, chemische Einflüsse, wie z. B. auch Seewasser, und gegen hohe Temperaturen zeigt.

Gelöst wird diese Aufgabe durch ein Drahtseil der eingangs genannten Gattung, dessen kennzeichnende Merkmale darin zu sehen sind, daß das Kunststoffband eine streckorientierte Polyesterfolie ist, welche eine Breite von 2 bis 6 mm und eine Dicke von 10 bis 100 μm hat und welche wendelförmig überlappend um das Trägerelement gewickelt ist.

Der Kennträger in diesem Drahtseil besteht bevorzugt aus einem Kunststoffband mit einer Breite von 3 bis 4 mm. Die Dicke des Kunststoffbandes beträgt bevorzugt 50 bis 100 μm. Das so beschaffene Kunststoffband wird wendelförmig überlappend um das Trägerelement gewickelt, wodurch eine größere Festigkeit erreicht wird.

Das Kunststoffband besteht bevorzugt aus streckorientierter Polyethylenterephthalatfolie, es kann aber auch Polyamid, Polyolefin oder Polyurethan dazu verwendet werden. Die Orientierung kann sowohl mono- als auch biaxial erfolgen. Die Folie besitzt einen Aufdruck, durch welchen die Informationen vermittelt werden. Der Aufdruck besitzt eine Abrieb- oder Scherfestigkeit von mehr als 0,5 N/15 mm Streifenbreite. Bei einem Test mit herkömmlichen Klebeband, das man auf die bedruckte Stelle aufklebt und ruckartig wieder abzieht, darf die Bedruckung nicht zerstört werden.

Das Trägerelement besteht bevorzugt aus Glasfasern oder aus Metalldraht. Es können aber auch Fasern aus Polyester, Polyimid, Kohlenstoff oder Kombinationen aus diesen verwendet werden. Das Trägerelement besitzt einen Durchmesser von 100 bis 200 μm und eine Mindestreißfestigkeit von 400 N/mm².

Der Kennträger aus Kunststoffband und Trägerelement kann in weiteren Ausführungsformen der Erfindung noch mit Lack überzogen oder mit einem Metallüberzug versehen sein. Er wird in einem Längszwischenraum zwischen den Litzenbündeln im gleichen Verseilwinkel wie diese in das Drahtseil eingearbeitet.

Das erfindungsgemäße Drahtseil besitzt den Vorteil, daß Informationen über Herstellungsdatum sowie Qualitätsmerkmale und technische Verwendungszwecke bei normalem Betrieb desselben noch lange Zeit nach dem Herstellungsdatum erkennbar sind. Außerdem wird durch den Kennträger aus Kunststoffmaterial eine bessere Verschiebbarkeit der Litzenbündel untereinander erzielt, was eine größere Geschmeidigkeit und Korrosionsbeständigkeit des Drahtseils zur Folge hat.

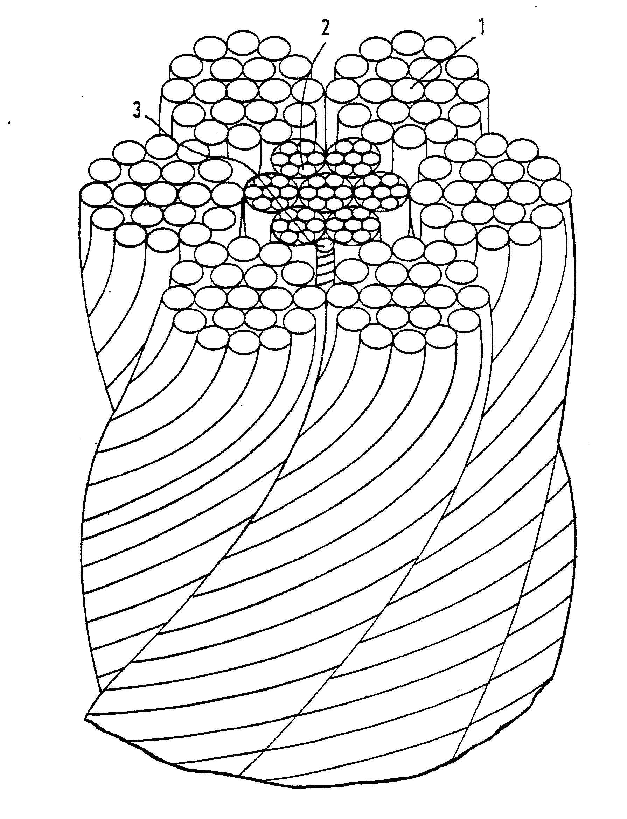

Die Erfindung soll näher erläutert werden durch die Zeichnung, worin 1 eine Litze, 2 die Stahlseileinlage und 3 den Kennträger darstellen.

## Patentansprüche

1. Drahtseil, bestehend aus mehreren Litzen, die um eine Faser- oder Stahldrahteinlage verseilt sind, welches einen dauerhaften Kennträger enthält, wobei der Kennträger in Form eines mit Informationen versehenen Kunststoffbandes, welches wendelförmig um ein Trägerelement gewickelt ist, in längsaxialer Richtung in das Drahtseil eingearbeitet ist, dadurch gekennzeichnet, daß das Kunststoffband eine streckorientierte Polyesterfolie ist, welche eine Breite von 2 bis 6 mm und eine Dicke von 10 bis 100 μm hat und welche wendelförmig überlappend um das Trägerelement gewickelt ist.

2. Drahtseil nach Anspruch 1, dadurch gekennzeichnet, daß das Kunststoffband eine streckorientierte Polyethylenterephthalatfolie ist, welche einen Aufdruck besitzt mit einer Abrieb- oder Scherfestigkeit von mehr als 0,5 N/15 mm Streifenbreite.

3. Drahtseil nach einem der Ansprüche 1 oder 2, dadurch gekennzeichnet, daß das Trägerelement eine Glasfaser oder ein Kunststoff- oder Metalldraht mit einem Durchmesser von 100 bis 200 μm und einer Mindestreißfestigkeit von 400 N/mm² ist.

4. Verwendung einer streckorientierten Polyesterfolie mit hoch abriebfestem Aufdruck als Informationsträger für Drahtseile, welche wendelförmig überlappend um ein Trägerelement gewickelt ist und zusammen mit diesem zwischen den Litzenbündeln im gleichen Verseilwinkel wie diese in das Drahtseil eingearbeitet wird.

## Claims

1. A wire rope comprising several strands twisted together about a fiber core or steel rope core and containing a durable marker, whereby said marker, which is in the form of a plastic tape carrying information and is wound helically about a support element, is worked into the wire rope in the direction of the longitudinal axis, characterized in that said plastic tape comprises a polyester film oriented by stretching, which has a width of 2 to 6 mm and a thickness of 10 to 100 μ and which is wound about the support element in helically overlapping manner.

2. The wire rope as claimed in Claim 1, wherein the plastic tape is a stretch-oriented polyethylene terephthalate film carrying an impression which has an abrasion and shear strength of more than 0.5 N/15 mm strip width.

3. The wire rope as claimed in Claim 1 or 2, wherein the support element is a glass fiber or a plastic or metal wire having a diameter of 100 to 200 μm and a minimum tear strength of 400 N/mm².

4. The use of a stretch-oriented polyester film possessing a highly abrasion-resistant impression as an information carrier for wire ropes, whereby said polyester film is wound about a support element in helically overlapping manner and is worked into the wire rope between the bundles of strands, together with said support element and at the same twisting angle as the strands.

## Revendications

1. Câble métallique, constitué de plusieurs torons qui sont toronnés autour d'une âme de fibres ou de fil d'acier qui contient un support d'identification durable, dans lequel le support d'identification sous la forme d'un ruban de matière plastique muni d'informations, qui est enroulé en hélice autour d'un élément de support, est incorporé dans le sens longitudinal dans le câble métallique, caractérisé en ce que le ruban de matière plastique est une feuille de polyester orientée par étirage qui a une largeur de 2 à 6 mm et une épaisseur de 10 à 100 microns, et qui est enroulée en hélice, avec recouvrement, autour de l'élément de support.

2. Câble métallique suivant la revendication 1, caractérisé en ce que le ruban de matière plastique est une feuille de téréphtalate de polyéthylène orientée par étirage qui possède une impression ayant une résistance à l'abrasion ou au cisaillement de plus de 0,5 N/15 mm de largeur de bande.

3. Câble métallique suivant la revendication 1 ou 2, caractérisé en ce que l'élément de support est une fibre de verre ou un fil de matière plastique ou de métal ayant un diamètre de 100 à 200 microns et une résistance minimale à la traction de 400 N/mm².

4. Utilisation d'une feuille de polyester orientée par étirage, ayant une impression douée d'une résistance élevée à l'abrasion, comme support d'information pour des câbles d'acier, laquelle feuille est enroulée en hélice, avec recouvrement autour d'un élément de support, et est incorporée au câble métallique en même temps que celui-ci entre les faisceaux de torons avec le même angle de toronnage que ceux-ci.